# EUROPEAN PATENT APPLICATION

(11) **EP 1 777 995 A2**
(43) Date of publication of application: **25.04.2007**
(21) Application number: 06460012.5
(22) Date of filing: 29.05.2006
(51) Int. Cl.: H05B 41/288

(54) **Power supply for discharge lamp and its control structure**

(30) Priority: 10.06.2005 PL 37566405
(71) Applicant: Navirem-Sigma Sp. z.o.o., 70-952 Szczecin (PL); Kowalski, Dariusz, 70-837 Szczecin (PL); Subocz, Jan, 70-773 Szczecin (PL)
(72) Inventor: Kowalski, Dariusz, 70-837 Szczecin (PL); Subocz, Jan, 70-773 Szczecin (PL)
(74) Representative: Kachnic, Tadeusz

(57) **Abstract**

Summary of the invention

Subjects of invention is control method of discharge lamp and electronic power supply of discharge lamp, particularly high power lamp.

By this invention, discharge lamp control method supplies energy as bipolar starting(ignition) pulses until the lamp has achieved predefined values of starting(ignition) current. These pulses have constant amplitude and duration therefore starting current varies in accordance with lamp impedance characteristic. At the end of ignition, when the starting phase is finished, predefined lamp operating current value is kept by generation of formed bipolar energy pulses of values depending on impedance of the lamp.
Discharge lamp power supply consists of rectifier 1 and circuits located between it and discharge lamp 7. These circuits are: circuit generating bipolar pulses 2, over voltage protection circuit 3, circuit generating starting pulses 4 and high voltage transformer 6.

## Description

Subjects of invention is control of discharge lamp and electronic power supply of discharge lamp, particularly high power lamp.

Control methods of discharge lamp operation are based on predefined length of starting phase period and constant value of starting current.

Described method of operation in conjunction with high power lamp causes high over voltages of values which have an effect on frequent power supply's failures and periods of unstable lamp operation.

Number of solutions are known in the field of electronic power supplies of discharge lamps (e.g. patent specification USA nr. 6 175 200) which have variable switching periods of switching power transistors and battery sets recommended to be its power source. Starting(ignition) pulse is generated during the whole period of start up and during operation of discharge lamp. This system is designed to supply high pressure doped discharge lamps used in car industry in front lamps of cars. This solution can be used to supply discharge lamps of low power, up to several of watts, while usage of high power discharge lamps is limited by capacity of battery set.

The purpose of invention is to design control method of high power discharge lamp and electronic power supply for such a lamp.

By this invention, discharge lamp method supplies energy as bipolar starting(ignition) pulses until the lamp has achieved predefined values of starting current. These pulses have constant amplitude and duration therefore starting current varies accordance to lamp impedance characteristic. At the end, when the starting(ignition) phase is finished, predefined lamp operating current value is kept by generation of formed bipolar energy pulses with values depending on impedance of the lamp.

According to the invention, discharge lamp power supply has four circuits connected between rectifier and discharge lamp with high voltage transformer. These are: circuit generating starting(ignition) pulses, circuit regulating value of supply voltage, over voltage protection circuit and circuit generating bipolar pulses.

Method of discharge lamp operation control, base on supplying lamp with energy pulses of constant amplitudes and periods, changes lamp current according to the impedance characteristic of the lamp. It allows to achieve defined values of UV radiation emission, with energy savings up to 30%, compared to classical methods and systems, based on transformers and passive regulation elements.

Sequence of control signals allows optimal operation of power supply, where switching frequency of the power transistors is constant and starting(ignition) pulse is generated only during starting phase. Lamp average power is regulated by voltage changes in circuit generating bipolar pulses.

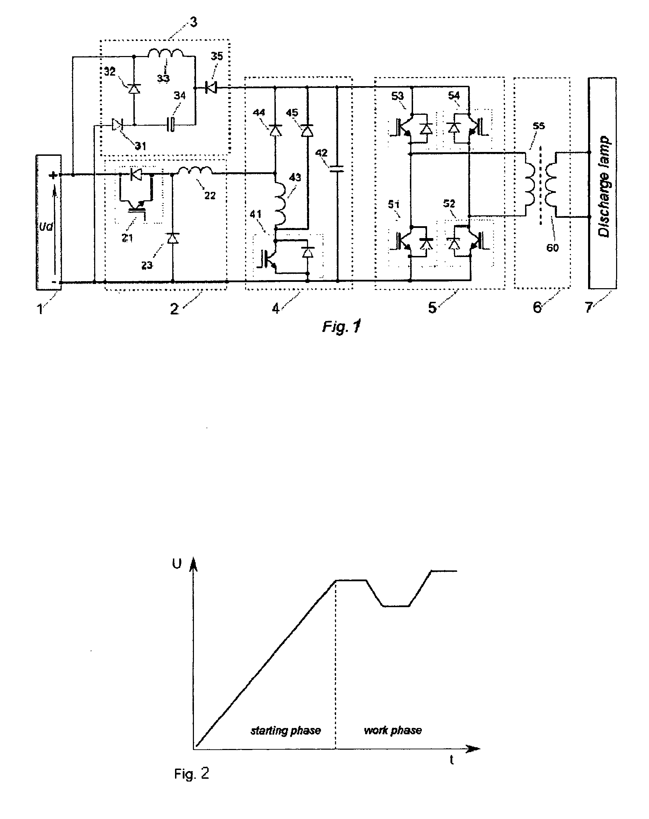

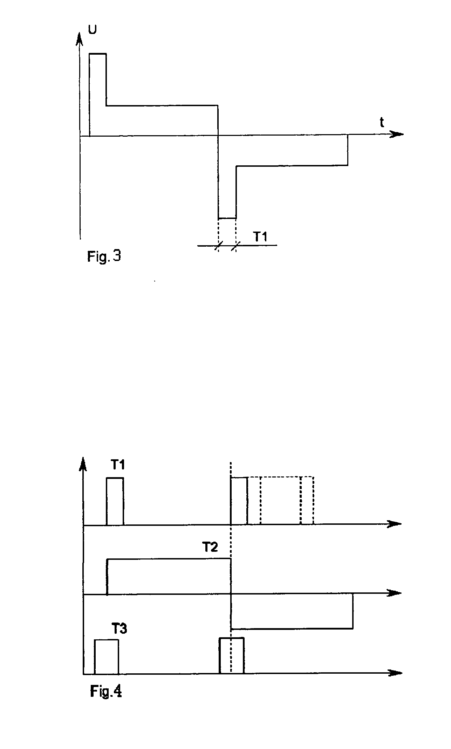

Discharge lamp power supply by this invention is presented on examples, where fig. 1 shows power supply scheme, fig. 2 shows voltage characteristic, fig 3. shows starting pulse characteristic, fig. 4 shows times T1, T2 and T3 sequence during starting phase and during lamp operation.

Discharge lamp power supply consists of rectifier 1 and circuits located between it and discharge lamp 7. These circuits are: circuit regulating supply voltage 2, over voltage protection circuit 3, circuit generating starting pulses 4, circuit generating bipolar impulses 5 and high voltage transformer 6.

Over voltage protection circuit consists of diodes 31 and 32, coil 33, capacitor 34 and diode 35. Circuit generating and controlling starting(ignition) pulses is based on diode's 35 anode connected with cathodes of 44 and 45 diodes, transistors collectors 53 and 54, one electrode of capacitor 42 and transistor 41. Bipolar impulses circuit is built as power bridge containing two pairs of transistors operating alternately 51, 52 and 53, 54, and high voltage transformer 6 with windings 55, 61. High voltage transformer 6 is connected to discharge lamp 7.

### Discharge lamp control process proceeds as follows:

While predefined values of starting(ignition) current are not achieved in lamp, serial semiconductor power element - transistor 21 - is switched on periodically for period T₁. During this period one of transistors pairs is switched on: 51, 52 or 53, 54 for period T₂ simultaneously with switching on parallel semiconductor power element - transistor 41 - for constant period of time T₃, which is shorter than T₂. After period T₁ serial semiconductor power element is switched off and subsequent phase begins. It is continued to the end of starting(ignition) time when system turns into operation mode during which predefined value of current is kept, parallel semiconductor power element is cyclically switched on and one of pairs of alternately operating transistors is switched on too. In the same time serial semiconductor power element is cyclically switched on for period T₁, which varies according to changes of power values supplying discharge lamp, while period T₃ < T₁ < T₂.

## Claims

1. Solution of discharge lamp operation control is that, supplies energy as generated bipolar starting(ignition) pulses until predefined value of starting(ignition) current is achieved by discharge lamp. These bipolar pulses have constant amplitude and period of operation, so that starting current varies according to impedance characteristic of discharge lamp, after starting phase predefined value of operating current is kept by generating formed bipolar energy pulses of values depending on lamps impedance.

2. Discharge lamp's power supply consists of rectifier 1 and circuits located between it and discharge lamp 7 with high voltage transformer. These circuits are: circuit regulating supply voltage 2, over voltage protection circuit 3, circuit generating starting pulses 4, circuit generating bipolar pulses 5 and high voltage transformer 6.
